# EUROPÄISCHE PATENTSCHRIFT

(11) **EP 2 130 000 B1**
(45) Veröffentlichungstag und Bekanntmachung des Hinweises auf die Patenterteilung: **15.01.2014**
(21) Anmeldenummer: 08735569.9
(22) Anmeldetag: 28.03.2008
(51) Int. Cl.: G01D 5/20, G01B 7/02, G01B 7/30

(54) **DREHWINKELSENSOR ODER LÄNGENSENSOR**
ROTATION ANGLE SENSOR OR LENGTH SENSOR
CAPTEUR D'ANGLE DE ROTATION OU CAPTEUR DE LONGUEUR

(30) Priorität: 29.03.2007 DE 102007015195
(43) Veröffentlichungstag der Anmeldung: 09.12.2009
(73) Patentinhaber: ZF Friedrichshafen AG, 88038 Friedrichshafen (DE)
(72) Erfinder: SCHREIBER, Michael, 92690 Pressath (DE)
(86) Internationale Anmeldenummer: PCT/EP2008/053736
(87) Internationale Veröffentlichungsnummer: WO 2008/119758

(56) Entgegenhaltungen:
- EP-A- 0 378 179
- EP-A- 0 605 847
- DD-A- 256 628
- DE-A1- 4 317 512
- DE-A1- 19 738 841
- US-A- 3 749 999
- US-A- 4 862 061
- US-B1- 6 255 810

## Beschreibung

Die Erfindung bezieht sich auf einen Drehwinkelsensor mit zwei oder mehr Oszillatoren gemäß Patentanspruch 1 sowie auf einen Längensensor mit zwei oder mehr Oszillatoren gemäß Anspruch 21.

US 6 255 810 B1 offenbart einen induktiven Winkelsensor mit einem induktiven Koppelelement, dessen Winkelposition bezüglich der Spulenanordnung auf einer Leiterplatte detektiert wird.

Aus dem Stand der Technik DE 690 13 170 T2 ist ein Näherungssensor bekannt, der mit sogenannten Streifenleitungen arbeitet. Als Streifenleitung wird eine bestimmte Klasse von elektrischen Wellenleitern bezeichnet, die aus einem oder mehreren dünnen leitfähigen Streifen bestehen, die auf einem Dielektrikum aufgebracht sind. Streifenleiterstrukturen können z. B. aus in einer Ebene angeordneten Leitungsstreifen bestehen. Sie sind oft isoliert in oder über einer metallischen Fläche angeordnet. Ihr Einsatzgebiet ist die Hochfrequenztechnik und dort der Bereich der Mikrowellen. Sie stellen definierte Impedanzen in Schaltungen zur Fortleitung, Kopplung und Filterung hoher Signalfrequenzen bereit.

Häufig wird hierfür der englische Ausdruck Stripline verwendet, manchmal auch der englische Ausdruck Microstrip, der jedoch eine besondere Bauform bezeichnet. Als Streifenleitungen werden jedenfalls nur solche Leiterbahnen auf gedruckten Schaltungen (Leiterplatten) bezeichnet, die als Wellenleiter dimensioniert sind und so betrieben werden. Die elektrischen und magnetischen Felder verlaufen fast ausschließlich senkrecht zur Ausbreitungsrichtung, wie dies auch in Koaxialleitungen oder Zweidrahtleitungen der Fall ist. Streifenleitungen werden demgegenüber jedoch nur für kurze Entfernungen innerhalb von Baugruppen eingesetzt.

Von dieser Technik macht der Näherungssensor gemäß der Druckschrift DE 690 13 170 T2 Gebrauch. Offenbart ist ein Näherungssensor mit genau einem Oszillator und genau einem Betätigungselement, nicht ein Drehwinkel- oder Längensensor mit zwei oder mehr Oszillatoren. Dementsprechend wird auch nur der Abstand dieses Betätigungselements von dem Oszillator im Stand der Technik ausgewertet, nicht etwa eine Relativbewegung über einen Bogen oder über eine Linie von mehreren Oszillatoren. Die bekannte einzelne Streifenleitung ist entweder linienartig (Fig. 5/6) oder spiralartig geformt (Fig.7/8). Die Aufgabe der Erfindung besteht darin, die Technik des bekannten Näherungsschalters für Drehwinkel- und Längensensoren nutzbar zu machen.

Die Lösung besteht unter Einschluss der genannten technischen Voraussetzungen (Mehrzahl von Oszillatoren) darin, die Streifenleitungen der Sensorelemente derart zu formen, dass ein Betätigungselement mehr als einen Oszillator überdeckt bzw. dass mehrere Betätigungselemente mehr als einen Oszillator überdecken. Diese Lösung ist im Anspruch 1 für einen Drehwinkelsensor und im Anspruch 8 für einen Längensensor definiert. Weitere technische Merkmale und Ausgestaltungen ergeben sich aus den jeweiligen abhängigen Ansprüchen.

Insbesondere kann das Ensemble von Streifenleitungen bogenförmig ineinander geschachtelt sein; wenn das dazugehörige Betätigungselement eine schlanke Stangenform aufweist, so überdeckt es in jeder Position zwei bis drei Sensorelemente. Analog dazu kann die Struktur der Streifenleitungen auch unverdreht sein, während das Betätigungselement sichelförmig verbogen ist oder schräg liegt. Auch dann werden in jeder Messposition zwei oder drei Sensorelemente überdeckt. Ein vergleichbarer Effekt wird erreicht, wenn zwei mechanisch gekoppelte Betätigungselemente mehr als einen Oszillator überdecken.

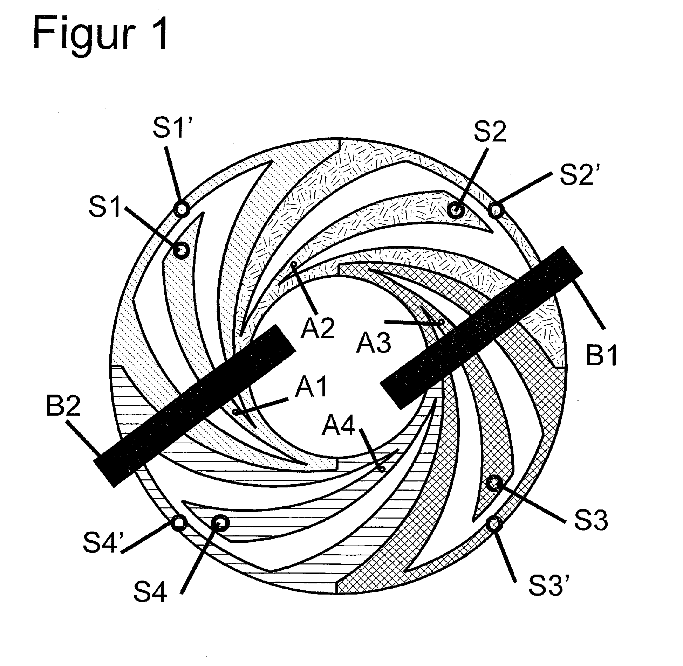

Weitere Merkmale und Vorteile der Erfindung ergeben sich aus der anschließenden Figurenbeschreibung. Dabei zeigt
Figur 1 ein Ausführungsbeispiel eines Drehwinkelsensors mit vier bogenförmig ineinander geschachtelten Streifenleiterstrukturen und mit zwei geraden, in etwa radial liegenden Betätigungselementen;

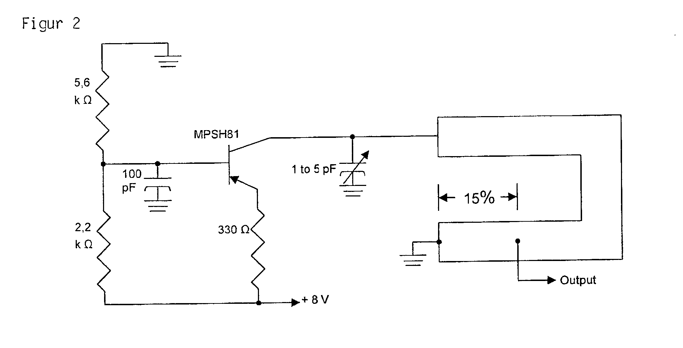

Figur 2 ein Schaltbild einer bekannten Streifenleitung (Microstrip), die drei Anschlüsse aufweist und mit Hilfe eines Kondensators in ihrem Frequenzbereich abstimmbar ist;

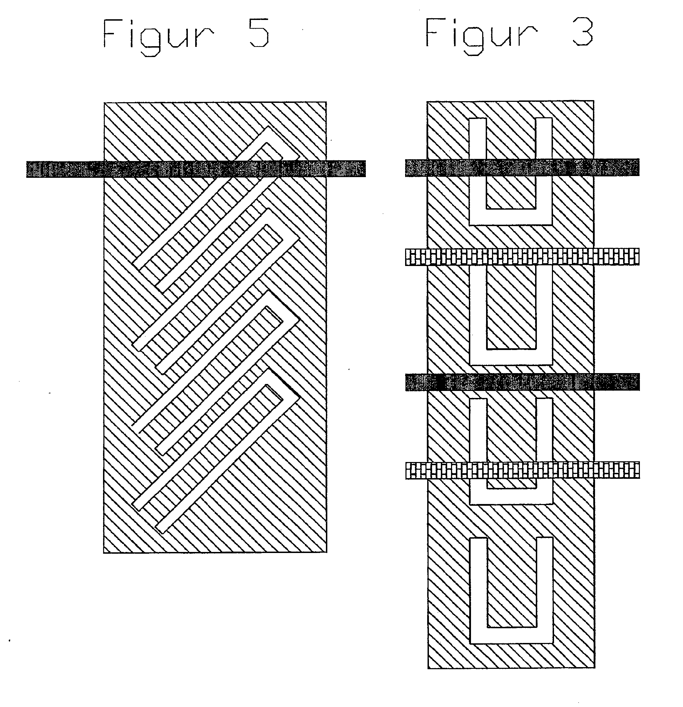

Figur 3 eine lineare, überlappende Anordnung von Streifenleitungen, überlappend bezogen auf ein gerades Betätigungselement;

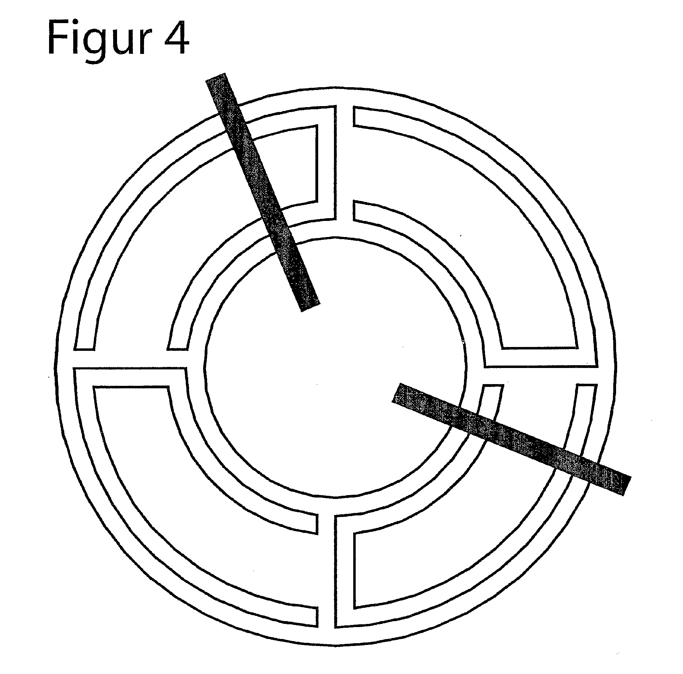

Fig.4 eine kreisbogenförmige Anordnung von Streifenleitungen mit zwei gekoppelten Betätigungselementen nach der Erfindung; und
Fig. 5 eine geradlinige (lineare) Anordnung von Streifenleitungen mit zwei gekoppelten Betätigungselementen nach der Erfindung.

In dem Ausführungsbeispiel nach Figur 1 erfolgt die berührungslose Ermittlung eines exakten Drehwinkels (oder in anderen Anordnungen auch eines Drehmoments) mit kreisförmig angeordneten Stripline-Oszillatoren. Hierbei ist bspw. von dem U-förmig angeordneten Stripline-Oszillator gemäß Figur 2 oder von der Linienstruktur oder von der Spiralstruktur gemäß dem Stand der Technik DE 690 13 170 T2 auszugehen. Die Streifenleitung wird gewöhnlich durch Bearbeitung der oberen Metallisierung (Ätzen oder Fräsen) des Trägers angefertigt. Um mit Hilfe der bekannten Oszillatorgeometrien einen Drehwinkel über 360 Grad erfassen zu können, muss man mehrere dieser Microstrips kreisförmig anordnen. Wenn man jedoch keine besonderen Vorkehrungen trifft, so ergibt sich als Nachteil, dass die gewünschte Drehwinkelmessung nicht unterbrechungsfrei mit gleichbleibend hoher Genauigkeit erfolgen kann. Bei der in Figur 1 gezeigten Lösung ist es hingegen nicht nur möglich, den Drehwinkel dynamisch mit hoher Winkelauflösung zu messen, sondern es ist auch möglich, mit relativ geringem weiterem Aufwand zusätzlich das Drehmoment zu erfassen. Die berührungslose Ermittlung des Drehwinkels erfolgt dank der Oszillatoren, die mit hohen Frequenzen schwingen (GHz-Bereich), mit einer Winkelauflösung von bspw. 0,01 Grad über einen Radius von wenigen Zentimetern.

Ausgehend von dem angeführten Stand der Technik werden die bekannten Streifenleitungen in Form eines Kreissegmentes verzerrt und in gewissem Sinne - nämlich bezogen auf das Betätigungselement - überlappend angeordnet. In Figur 1 kann man vier einzelne Streifenleitungen anhand der schwarzen Umrandungen erkennen; es können jedoch auch andere Mengen von Streifenleitungen verwendet werden. Die Streifenleitungen können galvanisch voneinander getrennt sein; sie können aber auch aus einer Kupferfläche bestehen (Hochfrequenzprinzip). Bei beiden Varianten würde die Funktion die gleiche bleiben; lediglich die Frequenzen würden sich ändern.

Eine Betätigung erfolgt in Figur 1 bspw. durch eine Metallstange, welche über die Oszillatoren geführt wird. An jeder Streifenleitung bezeichnet S1 bis S4 den entsprechenden Anschlusspunkt für die Oszillatorschaltung. Die Anschlusspunkte S1 bis S4 können auch platzsparend auf der Rückseite der Platine aufgebracht werden. Des Weiteren werden die Auskopplungspunkte des Oszillatorsignals mit A1 bis A4 bezeichnet. Entsprechend der überlappenden Verdrehung, die der Figur 1 zu entnehmen ist, können die Streifenleitungen auch in entgegengesetzter Richtung verdreht sein bzw. spiegelverkehrt angeordnet sein. Es sind dann ebenfalls die Anschlusspunkte S1 bis S4 für die Oszillatorschaltungen und die Auskopplungspunkte A1 bis A4 der Oszillatorsignale entsprechend anzupassen.

Anhand der Figur 1 ist zu erkennen, wie die oben beschriebene Überlappung zu verstehen ist. Die Streifenleitungen sind derart geformt, dass das eine Betätigungselement (oder auch mehrere Betätigungselemente) stets mehr als einen Oszillator überdeckt (oder überdecken). Dank dieser Überlappung ist eine lückenlose Erfassung der Position möglich. Mit nur zwei Spulen kann theoretisch bereits eine ganze Umdrehung lückenlos erfasst werden. Sollte zusätzlich zur Drehwinkelerfassung eine Drehmomentenerfassung stattfinden, kann die Zahl der Oszillatoren dementsprechend erhöht werden.

Als Bedämpfungselemente B1 und B2 der Streifenleitungen können verschiedene Materialien und Geometrien dienen (z. B. Metallplättchen, Ferrite etc.); jedoch wird bevorzugt eine Metallstange verwendet.

Durch die hohen Frequenzen der Oszillatoren wird trotz kurzer Messzeit eine sehr hohe Dynamik erreicht. Um die Auswertung der Signale zu erleichtern, ist eine Frequenzverschiebung (z. B. durch einen Multiplizierer) in ein niedrigeres Frequenzband empfehlenswert. Anschließend kann die Auswertung der berührungslos gemessenen Signale z. B. mit Hilfe digitaler Technik erfolgen.

Die Erfindung begünstigt durch Gleichverteilung der Temperatur die Kompensation von zeitlichen Temperaturunterschieden, also eine Schwankungskompensation, die in der digitalen Auswertung erfolgt. Die Sensoranordnung gemäß Figur 1 trägt deshalb zu einem temperaturstabilen System bei. Als weiterer Vorteil ist zu erwähnen, dass die elektromagnetische Verträglichkeit (EMV) wesentlich unkritischer ist als bei bekannten Drehwinkelsensoren, da durch die hohen Frequenzen die Abschirmung erleichtert wird und durch einen Auswertungsschritt der Integration (wegen des Frequenzmessverfahrens) Störungen herausgemittelt werden. Im Gegensatz zu bekannten Drehwinkelsensoren werden aktive Bauteile eingespart.

In Figur 3 ist eine lineare Aufreihung von Streifenleitungen dargestellt, die als Rektifikation der in Figur 1 dargestellten bogenförmigen Aufreihung gedacht werden kann. Dementsprechend handelt es sich um einen Längensensor, der die Position des geradlinigen Betätigungselements feststellt. Im Messbereich der Anordnung überdeckt das Betätigungselement - wegen der "überlappenden" Schrägstellung der Streifenleitungen - mehr als eine oszillierende Streifenleitung. Im übrigen gelten die Ausführungen zu Figur 1 und Figur 2.

Die Figur 4 und die Figur 5 zeigen Anordnungen (wiederum bogenförmig für Winkelmessung und geradlinig für Längenmessung), die sich von den entsprechenden Strukturen gemäß Figur 1 und Figur 3 durch eine andere Realisierung der Überlappung unterscheiden. In den Strukturen der Figur 4 und der Figur 5 sind die Streifenleitungs-Oszillatoren nicht sichelförmig und schräg ineinander geschachtelt, bezogen auf ein radiales oder transversales Betätigungselement. Viel mehr sind zwei radiale Betätigungselemente (Figur 4) oder zwei transversale Betätigungselemente (Figur 5) mechanisch miteinander gekoppelt. Entweder befinden sich die zwei Betätigungselemente auf einem gemeinsamen Träger oder es werden zwei einzeln getragene Betätigungselemente eingesetzt, die immer in einem vorbestimmten, festen Abstand zueinander verfahren werden. Auch durch eine solche Anordnung ist das erfindungsgemäße Prinzip verwirklicht, demzufolge in jedem Punkt des Messbereichs mehr als ein Stripline-Oszillator überdeckt wird.

## Patentansprüche

1. Drehwinkelsensor mit zwei oder mehr Stripline-Oszillatoren (S1, S1', A1; S2, S2'; A2; ...), der als derartige Sensorelemente (S1, S1', A1; S2, S2', A1; ...) jeweils Streifenleitungen in Form von sogenannten Microstrips auf einem dielektrischen Träger aufweist, wobei die Stripline-Oszillatoren (S1, S1', A1; S2, S2', A2; ...) entsprechend der Winkelmessung bogenförmig aufgereiht sind, wobei ein oder mehrere Betätigungselemente (B1, B2), beispielsweise Wirbelstrom-Betätigungselemente, in einer Relativbewegung über die bogenförmige Aufreihung geführt werden, und wobei die Streifenleitungen in Form von sogenannten Microstrips derart geformt sind, dass das eine oder die mehreren Betätigungselemente (B1, B2) mehr als einen Stripline-Oszillator (S1, S1', A1; S2, S2', A2; ...) überdeckt oder überdecken.

2. Drehwinkelsensor nach Anspruch 1, **dadurch gekennzeichnet, dass** Streifenleitungen in Form von sogenannten Microstrips (S1, S1', A1; S2, S2', A2; ...) schräg zur Richtung der Relativbewegung liegen.

3. Drehwinkelsensor nach Anspruch 2, **dadurch gekennzeichnet, dass** die Streifenleitungen in Form von sogenannten Microstrips (S1, S1', A1; S2, S2', A2; ...) bogenförmig ausgelegt sind.

4. Drehwinkelsensor nach Anspruch 3, **dadurch gekennzeichnet, dass** die Streifenleitungen in Form von sogenannten Microstrips (S1, S1', A1; S2, S2', A2; ...) bogenförmig ineinander verschachtelt sindn.

5. Drehwinkelsensor nach einem der bisherigen Ansprüche 1 bis 4, **dadurch gekennzeichnet, dass** das Betätigungselement (B1) eine gerade Metallstange ist.

6. Drehwinkelsensor nach einem der bisherigen Ansprüche 1 bis 5, **dadurch gekennzeichnet, dass** zwei Betätigungselemente (B1, B2) zwei gerade, miteinander mechanisch gekoppelte Metallstangen sind.

7. Sensor mit zwei axial beabstandeten Drehwinkelsensoren nach einem der Ansprüche 1 bis 6 zur Verwendung als Drehmomentensensor.

8. Längensensor mit zwei oder mehr Stripline-Oszillatoren ((S1, S1', A1; S2, S2', A2; ...), der als derartige Sensorelemente (S1, S1', A1; S2, S2', A2; ...) jeweils Streifenleitungen in Form von sogenannten Microstrips auf einem dielektrischen Träger aufweist, wobei die Stripline-Oszillatoren (S1, S1', A1; S2, S2', A2; ...) entsprechend der Längenmessung linienförmig aufgereiht sind, wobei ein oder mehrere Betätigungselemente (B1, B2), beispielsweise Wirbelstrom-Betätigungselemente, in einer Relativbewegung über die linienförmige Aufreihung geführt werden, und wobei die Streifenleitungen in Form von sogenannten Microstrips (S1, S1', A1; S2, S2', A2; ...) derart geformt sind, dass das eine oder die mehreren Betätigungselemente (B1, B2) mehr als einen Stripline-Oszillator überdeckt oder überdecken.

9. Längensensor nach Anspruch 8, **dadurch gekennzeichnet, dass** die Streifenleitungen in Form von sogenannten Microstrips (S1, S1', A1; S2, S2', A2; ...) schräg zur Richtung der Relativbewegung liegen.

10. Längensensor nach Anspruch 8 oder 9, **dadurch gekennzeichnet, dass** die Streifenleitungen in Form von sogenannten Microstrips (S1, S1', A1; S2, S2', A2; ...) bogenförmig ausgelegt sind.

11. Längensensor nach Anspruch 10, **dadurch gekennzeichnet, dass** die Streifenleitungen in Form von sogenannten Microstrips (S1, S1', A1; S2, S2', A2; ...) bogenförmig ineinander geschachtelt sind.

12. Längensensor nach Anspruch 8 bis 11, **dadurch gekennzeichnet, dass** das Betätigungselement (B1) eine gerade Metallstange ist.

13. Längensensor nach einem der Ansprüche 8 bis 11, **dadurch gekennzeichnet, dass** zwei Betätigungselemente (B1, B2) zwei gerade, miteinander mechanisch gekoppelte Metallstangen sind.

14. Sensor mit zwei beabstandete Längensensoren nach Anspruch 8 bis 13 zur Messung einer Positionsdifferenz.

15. Drehwinkelsensor nach Anspruch 1, **dadurch gekennzeichnet, dass** vier Streifenleitungen in Form von sogenannten Microstrips (S1, S1', A1; S2, S2', A2; ...) vorgesehen sind.

16. Längensensor nach Anspruch 8, in welchem vier Streifenleitungen in Form von sogenannten Microstrips (S1, S1', A1; S2, S2', A2; ...) vorgesehen sind.

## Claims

1. Rotation angle sensor comprising two or more stripline oscillators (S1, S1'; A1; S2, S2'; A2; ...) which, as such sensor elements (S1, S1'; A1; S2, S2'; A2; ...), each have striplines in the form of what are known as microstrips on a dielectric substrate, wherein the stripline oscillators (S1, S1'; A1; S2, S2'; A2; ...) are lined up in the form of curves corresponding to the angular measurement, wherein one or more actuating elements (B1, B2), for example eddy current actuating elements, are guided in a relative movement over the curved rows, and wherein the striplines in the form of what are known as microstrips are formed in such a way that the one actuating element or the plurality of actuating elements (B1, B2) covers or cover more than one stripline oscillator (S1, S1'; A1; S2, S2'; A2; ...).

2. Rotation angle sensor according to Claim 1, **characterized in that** striplines in the form of what are known as microstrips (S1, S1'; A1; S2, S2'; A2; ...) are located obliquely with respect to the direction of the relative movement.

3. Rotation angle sensor according to Claim 2, **characterized in that** the striplines in the form of what are known as microstrips (S1, S1'; A1; S2, S2'; A2; ...) are designed in the form of curves.

4. Rotation angle sensor according to Claim 3, **characterized in that** the striplines in the form of what are known as microstrips (S1, S1'; A1; S2, S2'; A2; ...) are nested in one another in the form of curves.

5. Rotation angle sensor according to one of the preceding Claims 1 to 4, **characterized in that** the actuating element (B1) is a straight metal rod.

6. Rotation angle sensor according to one of the preceding Claims 1 to 5, **characterized in that** two actuating elements (B1, B2) are two straight metal rods coupled mechanically to each other.

7. Sensor having two axially displaced rotation angle sensors according to one of Claims 1 to 6 for use as a torque sensor.

8. Length sensor having two or more stripline oscillators (S1, S1'; A1; S2, S2'; A2; ...) which, as such sensor elements (S1, S1'; A1; S2, S2'; A2; ...), each have striplines in the form of what are known as microstrips on a dielectric substrate, wherein the stripline oscillators (S1, S1'; A1; S2, S2'; A2; ...) are lined up linearly corresponding to the length measurement, wherein one or more actuating elements (B1, B2), for example eddy current actuating elements, are guided in a relative movement over the linear rows, and wherein the striplines in the form of what are known as microstrips (S1, S1'; A1; S2, S2'; A2; ...) are formed in such a way that the one actuating element or the plurality of actuating elements (B1, B2) covers or cover more than one stripline oscillator.

9. Length sensor according to Claim 8, **characterized in that** the striplines in the form of what are known as microstrips (S1, S1'; A1; S2, S2'; A2; ...) are located obliquely with respect to the direction of the relative movement.

10. Length sensor according to Claim 8 or 9, **characterized in that** the striplines in the form of what are known as microstrips (S1, S1'; A1; S2, S2'; A2; ...) are designed in the form of curves.

11. Length sensor according to Claim 10, **characterized in that** the striplines in the form of what are known as microstrips (S1, S1'; A1; S2, S2'; A2; ...) are nested in one another in the form of curves.

12. Length sensor according to Claims 8 to 11, **characterized in that** the actuating element (B1) is a straight metal rod.

13. Length sensor according to one of Claims 8 to 11, **characterized in that** two actuating elements (B1, B2) are two straight metal rods coupled mechanically to each other.

14. Sensor having two spaced length sensors according to Claims 8 to 13 for measuring a position difference.

15. Rotation angle sensor according to Claim 1, **characterized in that** four striplines in the form of what are known as microstrips (S1, S1'; A1; S2, S2'; A2; ...) are provided.

16. Length sensor according to Claim 8, in which four striplines in the form of what are known as microstrips (S1, S1'; A1; S2, S2'; A2; ...) are provided.

## Revendications

1. Détecteur d'angle de rotation comprenant deux oscillateurs à microruban (S1, S1', A1; S2, S2' ; A2 ; ...) ou plus qui, en tant qu'éléments de détection (S1, S1', A1; S2, S2', A2 ; ...) de ce type, présentent respectivement des lignes en bande sous de dits microrubans sur un support diélectrique, les oscillateurs à microruban (S1, S1', A1; S2, S2', A2 ; ...) étant disposés en enfilade en courbure conformément à la mesure d'angle, un ou plusieurs éléments d'actionnement (B1, B2), par exemple des éléments d'actionnement à courant de Foucault, étant guidés dans un mouvement relatif au-dessus de l'enfilade en courbure, et les lignes en bande sous forme de dits microrubans étant façonnées de telle sorte que l'un ou les plusieurs éléments d'actionnement (B1, B2) recouvre ou recouvrent plus d'un oscillateur à microruban (S1, S1', A1; S2, S2', A2 ; ...).

2. Détecteur d'angle de rotation selon la revendication 1, **caractérisé en ce que** des lignes en bande sous forme de dits microrubans (S1, S1', A1; S2, S2', A2 ; ...) se trouvent en biais par rapport à la direction du mouvement relatif.

3. Détecteur d'angle de rotation selon la revendication 2, **caractérisé en ce que** les lignes en bande sous forme de dits microrubans (S1, S1', A1; S2, S2', A2 ; ...) sont conçues avec une forme en courbure.

4. Détecteur d'angle de rotation selon la revendication 3, **caractérisé en ce que** les lignes en bande sous forme de dits microrubans (S1, S1', A1; S2, S2', A2 ; ...) sont imbriquées les unes dans les autres avec une forme en courbure.

5. Détecteur d'angle de rotation selon l'une des revendications précédentes 1 à 4, **caractérisé en ce que** l'élément d'actionnement (B1) est une tige métallique droite.

6. Détecteur d'angle de rotation selon l'une des revendications précédentes 1 à 5, **caractérisé en ce que** deux éléments d'actionnement (B1, B2) sont deux tiges métalliques droites couplées mécaniquement entre elles.

7. Détecteur comprenant deux détecteurs d'angle de rotation selon l'une des revendications 1 à 6, espacés dans le sens axial et destinés à être utilisés en tant que détecteur de couple.

8. Détecteur de longueur comprenant deux oscillateurs à microruban (S1, S1', A1; S2, S2', A2 ; ...) ou plus qui, en tant qu'éléments de détection (S1, S1', A1; S2, S2', A2 ; ...) de ce type, présentent respectivement des lignes en bande sous forme de dits microrubans sur un support diélectrique, les oscillateurs à microruban (S1, S1', A1; S2, S2', A2 ; ...) étant disposés en enfilade longitudinale conformément à la mesure de longueur, un ou plusieurs éléments d'actionnement (B1, B2), par exemple des éléments d'actionnement à courant de Foucault, étant guidés dans un mouvement relatif au-dessus de l'enfilade longitudinale, et les lignes en bande sous forme de dits microrubans (S1, S1', A1; S2, S2', A2 ; ...) étant façonnées de telle sorte que l'un ou les plusieurs éléments d'actionnement (B1, B2) recouvre ou recouvrent plus d'un oscillateur à microruban.

9. Détecteur de longueur selon la revendication 8, **caractérisé en ce que** les lignes en bande sous forme de dits microrubans (S1, S1', A1; S2, S2', A2 ; ...) se trouvent en biais par rapport à la direction du mouvement relatif.

10. Détecteur de longueur selon la revendication 8 ou 9, **caractérisé en ce que** les lignes en bande sous forme de dits microrubans (S1, S1', A1; S2, S2', A2; ...) sont conçues avec une forme en courbure.

11. Détecteur de longueur selon la revendication 10, **caractérisé en ce que** les lignes en bande sous forme de dits microrubans (S1, S1', A1; S2, S2', A2 ; ...) sont imbriquées les unes dans les autres avec une forme en courbure.

12. Détecteur de longueur selon les revendications 8 à 11, **caractérisé en ce que** l'élément d'actionnement (B1) est une tige métallique droite.

13. Détecteur de longueur selon l'une des revendications 8 à 11, **caractérisé en ce que** deux éléments d'actionnement (B1, B2) sont deux tiges métalliques droites couplées mécaniquement entre elles.

14. Détecteur comprenant deux détecteurs de longueur selon les revendications 8 à 13, espacés et destinés à la mesure d'une différence de position.

15. Détecteur d'angle de rotation selon la revendication 1, **caractérisé en ce que** quatre lignes en bande sous forme de dits microrubans (S1, S1', A1; S2, S2', A2 ; ...) sont prévues.

16. Détecteur de longueur selon la revendication 8, dans lequel sont prévues quatre lignes en bande sous forme de dits microrubans (S1, S1', A1; S2, S2', A2 ; ...).
